# EUROPEAN PATENT SPECIFICATION

(11) **EP 0 352 333 B1**
(45) Date of publication and mention of the grant of the patent: **16.02.1994**
(21) Application number: 89900895.7
(22) Date of filing: 23.12.1988
(51) Int. Cl.: G11B 7/24, G11B 11/10

(54) **DATA RECORDING MEDIUM**
DATENSPEICHERUNGSMEDIUM
SUPPORT D'ENREGISTREMENT DE DONNEES

(30) Priority: 24.12.1987 JP 328517/87
(43) Date of publication of application: 31.01.1990
(73) Proprietor: MATSUSHITA ELECTRIC INDUSTRIAL CO., LTD., Kadoma-shi, Osaka-fu, 571 (JP)
(72) Inventor: TANII, Kiyoshi, Higashi-Osaka-shi Osaka-fu 578 (JP); KASHIHARA, Toshiaki, Hirakata-shi Osaka-fu 573 (JP)
(74) Representative: Senior, Alan Murray
(86) International application number: JP8801312
(87) International publication number: WO8906037

(56) References cited:
- EP-A- 0 291 847
- US-A- 4 680 742

## Description

### TECHNICAL FIELD:

The present invention relates to an information recording carrier capable of optically recording and reproducing information.

### BACKGROUND ART:

In recent years, information recording devices of a type exclusively used for reproduction or of a type feasible for addition of writing have been taken up to be used in storing a large volume of information. Development is also energetically made on information recording devices of a type that can erase and rewrite information, using a magneto-optical recording medium or a medium of a phase change type. Of these recording mediums of the type that can erase and rewrite information, the magneto-optical recording medium, in particular, is regarded as a recording medium having a greatest possibility for practical utilization in view of the life time of mediums or the characteristics of reproducing signals.

Magneto-optical disks are described, for example, in "MAGNETO-OPTIC DISK STORAGE", IEEE TRANSACTION ON MAGNETICS, VOL.MAG-18, No. 6, November 1982, pp.1233-1237.

In optical disks having a recording film comprised of a metallic material, a means is employed for protecting the recording film with a moistureproof protective film so that the recording film can be prevented from undergoing oxidation and deterioration. In particular, a magneto-optical recording film comprised of a rare earth element and an amorphous alloy of Fe, Co or the like is made of readily oxidizable materials, so that the protective film plays a very great role.

Nitrides such as AlN, Si₃N₄ or oxides such as SiO₂ and Ta₂O₅ have been hitherto studied as materials for the protective film of optical disks having the magneto-optical recording film.

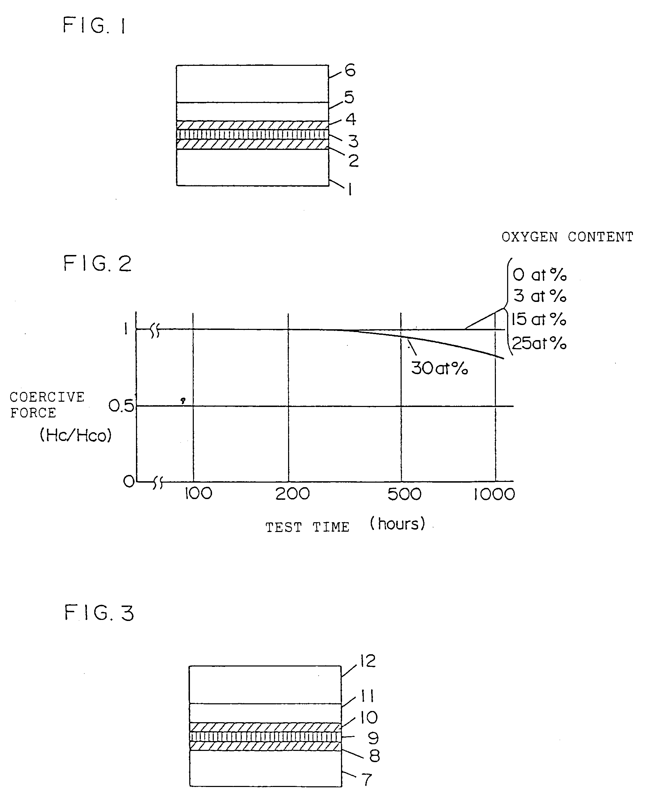

An example of the constitution of a conventional optical disk will be described below with reference to Fig. 3.

A substrate 7 and a substrate 12 are molded substrates made of polycarbonate. On the substrate 7, a protective film 8, an magneto-optical recording film 9 and a protective film 10 are laminated in this order, and then the laminate is adhered to the substrate through an adhesive layer 11. Here, the protective film 8 and protective film 10 are made of AlN, which protect from both sides the recording film 9 comprised of GdTbFeCo.

In the conventional protective films, however, there remains a problem with respect to the prevention of oxidation of the recording film. That is to say, when the protective film comprises a nitride, cracks tend to be produced in the film because of the stress remaining in the protective film, and thus water or oxygen invades through the cracks to cause oxidation of the recording film. When the protective film comprises an oxide, it has no perfect moisture resistance, and thus have had a problem that the oxidation of the recording film may proceed.

EP-A-0,291,847 discloses an optical disk in which the protective layer may be made from a mixture of, among other things, aluminium, aluminium nitride and aluminium oxide.

US-A-4,680,742 discloses an optical disk with a dielectric layer including Si₃N₄.

An aim of the present invention is to eliminate such problems conventionally involved, and provide an information recording carrier that may cause cracks on the protective film with difficulty, having a good crack resistance, and moreover has a good moisture resistance.

According to the present invention there is provided an information recording carrier, comprising a flat-platelike substrate, having on at least one side thereof an information recording film mainly composed of a metal, and a protective film covering at least one side of the recording film, said protective film containing aluminium nitride, characterised in that said aluminium nitride contains oxygen, the oxygen content being in the range of from 3 to 25 molar %.

Claim 1 is delimited with respect to US-A-4 680 742.

Thus, forming the protective film by adding oxygen to an aluminum nitride comprised of aluminum and nitrogen makes it possible to lower the residual stress in the protective film formed, so that, when compared with the conventional protective film comprised only of aluminum nitride, the cracks can be produced with difficulty resulting in an increase in crack resistance.

Now, a protective film is used which is comprised of a material comprising aluminum nitride containing oxygen in such a level that may not impair the moisture resistance. As a result, it has become possible to realize an information recording carrier that can satisfy both the moisture resistance and crack resistance.

### BRIEF DESCRIPTION OF THE DRAWINGS

Fig. 1 is a cross section of an information recording carrier according to an embodiment of the present invention; Fig. 2 is a graph of characteristics that shows the moisture resistance of the protective film; and Fig. 3 is a cross section of the conventional information recording carrier.

### BEST MODE FOR WORKING THE INVENTION

An embodiment of the present invention will be described below with reference to Fig. 1.

A substrate 1 is a molded substrate made of polycarbonate, on one side of which a protective film 2, a recording film 3, a protective film 4 are laminated in this order. Then the laminate is adhered to the polycarbonate substrate 6 through an adhesive layer 5 made of an ultraviolet curable resin. Here, the recording film 3 is a magneto-optical recording medium comprising GdTbFeCo, and the protective film 2 and protective film 4 are conductive material films constituted of aluminum, nitrogen and oxygen. The films of these three layers were all formed using magnetron sputtering. In particular, the protective film 2 and protective film 4 were formed using aluminum nitride as a sputtering target, and using a mixed gas of argon and oxygen which served as discharging gas. Here, the oxygen content in the film was adjusted by controlling the oxygen partial pressure in the gas.

In the optical disk constituted in the above way, the oxygen content in the protective film was varied, and high-temperature high-humidity environment tests were carried out on each sample. The tests were carried out under environmental conditions of a temperature of 80°C and a humidity of 80 % RH. Results of the changes in coercive force of recording films (GdTbFeCo magneto-optical recording mediums), observed in the tests, are shown in the drawing.

As will be evident from the results, it was made clear that the oxygen content of not more than 25 at% causes no changes in the coercive force even after the testing for 1,000 hours.

No lowering of the coercive force was also seen in an aluminum nitride protective film containing no oxygen, but pitting due to oxidation occurred on the recording film after lapse of 200 hours in the present tests. This is presumably because the residual stress in the protective film has caused minute cracks produced as a result of changes of external environment and moisture invaded through there to have caused the pitting. The protective films which were made to contain the oxygen all resulted in no pitting.

From these results, it was made clear that a superior protective effect can be exhibited as a result of incorporation of oxygen in a content of from 3 % to 25 % in terms of atom number ratio, into the protective film comprised of aluminum and nitrogen.

In the present embodiment, the protective films were formed on both sides of the recording film 3. The protective film according to the present invention, however, may be used on one side so long as the substrate 1, substrate 6 or adhesive layer 5 has a sufficient moisture resistance. In other words, a sufficient effect can be expected if the protective film is formed only on the side on which there is an anxiety about invasion of moisture or oxygen,
The recording film 3 may also be a film of a amorphous alloy of a reare earth element and a transition metal, commonly available in addition to the GdTbFeCo used in the present embodiment. It may also be a recording film of a phase change type, containing Te, Se or the like, without any changes in the moisture resistance of the protective film.

The effect of protecting the recording film can be well satisfied by the protective film of the present invention, so that the degree of freedom can be enlarged in selecting the substrate 1 and substrate 6, there can be used epoxy resins or PMMA, having a high moisture permeability, and it becomes further possible of course to apply the present invention in a single-structure disk applied with only an overcoat layer in place of the substrate 6 or adhesive layer 5.

### POSSIBILITY OF INDUSTRIAL UTILIZATION

As described in the above, the present invention makes it possible to improve the crack resistance and moisture resistance of the protective film, and thus to obtain an information recording carrier such as a highly reliable optical disk, that may not cause any oxidation deterioration of the recording film.

## Claims

1. An information recording carrier, comprising a flat-platelike substrate (1), having on at least one side thereof an information recording film (3) mainly composed of a metal, and a protective film (2, 4) covering at least one side of the recording film, said protective film containing aluminium nitride, characterised in that said aluminium nitride contains oxygen, the oxygen content being in the range of from 3 to 25 molar %.

2. An information recording carrier according to claim 1, wherein the information recording film comprises a magneto-optical recording material containing a rare earth element and a transition metal.

3. An information recording carrier according to claim 1 or 2, wherein the protective film is held between the flat-platelike substrate and the information recording film.

4. An information recording carrier according to claim 1 or 2, wherein the information recording film is held between the flat-platelike substrate and the protective film.

5. An information recording carrier according to any one of the preceding claims, wherein the protective film is formed by magnetron sputtering.

## Patentansprüche

1. Ein Informations-Aufzeichnungsträger mit einem flachen, plattenartigen Substrat (1), das auf mindestens einer Seite davon einen Informations-Aufzeichnungsfilm (3), der vorwiegend aus einem Metall besteht, und einen Schutzfilm (2, 4) besitzt, der mindestens eine Seite des Aufzeichnungsfilms bedeckt, wobei der Schutzfilm Aluminiumnitrid enthält, dadurch gekennzeichnet, daß das Aluminiumnitrid Sauerstoff enthält, wobei der Sauerstoffgehalt in dem Bereich von 3 bis 25 mol. Prozent (%) liegt.

2. Ein Informations-Aufzeichnungsträger nach Anspruch 1, worin der Informations-Aufzeichnungsfilm ein magneto-optisches Aufzeichnungsmaterial aufweist, das ein Seltenerdelement und ein Übergangsmetall enthält.

3. Ein Informations-Aufzeichnungsträger nach Anspruch 1 oder 2, worin der Schutzfilm zwischen dem flachen, plattenartigen Substrat und dem Informations-Aufzeichnungsfilm gehalten wird.

4. Ein Informations-Aufzeichnungsträger nach Anspruch 1 oder 2, worin der Informations-Aufzeichnungsfilm zwischen dem flachen, plattenartigen Substrat und dem Schutzfilm gehalten wird.

5. Ein Informations-Aufzeichnungsträger nach irgendeinem der vorhergehenden Ansprüche, worin der Schutzfilm durch Magnetron-Sputtern gebildet ist.

## Revendications

1. Support d'enregistrement d'informations, comprenant un substrat (1) analogue à une plaque plate, comportant au moins sur une de ses faces un film (3) d'enregistrement d'informations composé principalement d'un métal, et un film protecteur (2, 4) recouvrant au moins une des faces du film d'enregistrement, ledit film de protection contenant du nitrure d'aluminium, **caractérisé** en ce que ledit nitrure d'aluminium contient de l'oxygène, la teneur en oxygène étant comprise entre 3 et 25 moles %.

2. Support d'enregistrement d'informations selon la revendication 1, dans lequel le film d'enregistrement d'informations comprend un matériau d'enregistrement magnéto-optique contenant un élément de terres rares et un métal de transition.

3. Support d'enregistrement d'informations selon la revendication 1 ou 2, dans lequel le film protecteur est maintenu entre le substrat analogue à une plaque plate et le film d'enregistrement d'informations.

4. Support d'enregistrement d'informations selon la revendication 1 ou 2, dans lequel le film d'enregistrement d'informations est maintenu entre le substrat analogue à une plaque plate et le film protecteur.

5. Support d'enregistrement d'informations selon l'une quelconque des revendications précédentes, dans lequel le film protecteur est formé par pulvérisation cathodique par magnétron.
